(19) Europäisches Patentamt
European Patent Office
Office européen des brevets

(11) Publication number: 0 024 055
B1

(12) # EUROPEAN PATENT SPECIFICATION

(45) Date of publication of patent specification: 07.12.83

(51) Int. Cl.³: C 08 F 8/28, B 01 J 39/20 //C08F116/06

(21) Application number: 80104794.5

(22) Date of filing: 13.08.80

(54) **Weakly acidic cation exchange resins and process for producing same.**

(30) Priority: 14.08.79 JP 103352/79
08.10.79 JP 129745/79

(43) Date of publication of application:
18.02.81 Bulletin 81/7

(45) Publication of the grant of the patent:
07.12.83 Bulletin 83/49

(84) Designated Contracting States:
DE FR GB NL

(56) References cited:
CHEMICAL ABSTRACTS, vol. 85, 1976 page 32, abstract 63773e, Columbus, Ohio, USA HIRAYAMA, CHUICHI et al. "Production of cationic and amphoteric ion-exchangers from bead-shaped poly(vinylalcohol)"

CHEMISCHES ZENTRALBLATT, 1963, nr. 19, page 7777 SAKURADA, I. et al. "Synthese von vernetztem Polyvinylalkohol, der partiell mit Glyoxylsäure acetalisiert ist"

(73) Proprietor: MITSUBISHI CHEMICAL INDUSTRIES LIMITED
5-2, Marunouchi 2-chome Chiyoda-ku
Tokyo 100 (JP)

(72) Inventor: Itagaki, Takaharu
2415-57, Nara-cho Midori-ku
Yokohama-shi Kanagawa (JP)
Inventor: Ouchi, Hidenaga
17-13 Izumi-honcho 2-chome Komae-shi
Tokyo (JP)

(74) Representative: Vossius Vossius Tauchner Heunemann Rauh
Siebertstrasse 4 P.O. Box 86 07 67
D-8000 München 86 (DE)

EP 0 024 055 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Weakly acidic cation exchange resins and process for producing same

The weakly acidic cation exchange resins generally employed at present are those of the polyacrylic acid type or the polymethacrylic acid type. With the recent *progress* in techniques for using ion exchange resins, the acidity of these weakly acidic cation exchange resins has become an important factor.

For instance, in heat-regenerative ion exchange resins it is required that the weakly acidic cation exchange resin and the weakly basic anion exchange resin used have mutually compatible dissociation constants. When a cross-linked polyvinylbenzyldimethylamine is used as the weakly basic anion exchange resin, the weakly acidic resin used should have greater acidity than that of the polyacrylic acid type ion exchange resin. A phosphorylated cation exchange resin has greater acidity than the polyacrylic acid type resin. Although it is used in practice it is not suitable for the heat-regenerative ion exchange resin since its acidity is too high. No resin is commercially available which has moderate acidity, that is, higher than that of a polyacrylic acid type resin but lower than that of a phosphorylated resin.

Weakly acidic cation exchange resins having such moderate acidity will be suitable for application in various technical fields where conventional polyacrylic acid type resins and polymethacrylic acid type resins could not previously be employed. Examples of these applications are as a buffer in a low pH solution, for separating and purifying natural products, for conversion of salts of carboxylic acids having no electron attracting groups in the $\alpha$ or $\beta$ position into their free acids, as well as for heat-regenerative ion exchange resins.

As weakly acidic cation exchange resins of the carboxylic acid type other than the poly(meth)acrylic acid type, reaction products of polyvinyl alcohol in the form of spherical particles and glyoxylic acid are known; see Ch. Hirayama et al., Nippon Kagaku Kaishi 1976 (6), p. 998—1003, u. Chem. Abs. 85, 1976, p. 32, abstract No. 63773 e. One such example is an ionic exchange resin prepared by acetalyzing a polyvinyl alcohol in spherical particles through reaction with glyoxylic acid in an aqueous solution containing sulfuric acid and sodium sulfate.

This reaction proceeds schematically as follows:

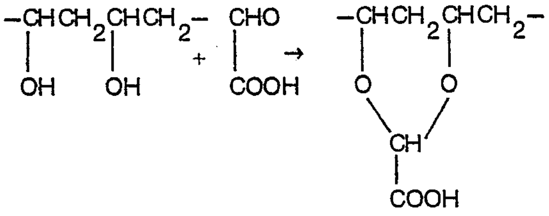

The acetalization products prepared by this process are not, however, practical as an ion exchange resin since the swelling volumes of the products are increased and accordingly the exchange capacity per unit volume is reduced as the exchange capacity increases. For instance, while the products obtained by the process have a swelling volume of 9.0 ml/g for an exchange capacity of 1.49 meq/g, the swelling volume increases to 13.6 ml/g for an exchange capacity of 2.42 meq/g and to 15.4 ml/g for an exchange capacity of 3.80 meq/g, respectively. Such a resin has an insufficient exchange capacity per unit volume and is liable to deform under pressure. Thus it cannot be considered a practical ion exchange resin. Accordingly, the above process has the drawback that it can only produce weakly acidic cation exchange resins having a small exchange capacity.

Furthermore it is known to prepare crosslinked polyvinyl alcohol which has been acetalized with glyoxylic acid; see I. Sakurada et al., Chem. high polymers [Tokyo] 16 (1959), 86—89 und Chem. Zentralblatt, 1963, No. 19, p. 7777.

Summary of the Invention

It is an object of the present invention to provide weakly acidic cation exchange resins on the basis of polyvinyl alcohol acetalized with glyoxylic acid in the presence of an acid and a water-soluble salt having moderate acidity, a small swelling volume and a large ion-exchange capacity, as well as a process for producing such cation exchange resins.

Another object of the present invention is to provide weakly acidic cation exchange resins having the desired low swelling volume but with all the large exchange capacity in the acetalization product which can be obtained by acetalyzing a specific cross-linked polyvinyl alcohol with glyoxylic acid in the presence of an acid and a water soluble salt.

These objects have been attained by providing a weakly acidic cation exchange resin consisting of polyvinyl alcohol acetalized with glyoxylic acid, characterized in that

a) the polyvinyl alcohol is crosslinked by crosslinking groups each containing two or more carbon atoms in such an amount that 4—50% of the hydroxyl groups of the polyvinyl alcohol can react, and

b) the resin has the following properties: exchange capacity of at least 3 meq/g, swelling volume of at most 10 ml/g, specific surface area of at least 0.5 $m^2/g$ and/or pore volume of at least 0.1 ml/g.

The weakly acidic cation exchange resin according to this invention can be produced by reacting a polyvinyl alcohol with a cross-linking reagent capable of forming cross-linking groups each containing two or more carbon atoms in

such an amount that 4—50% of the hydroxyl group of polyvinyl alcohol can react, and then reacting said cross-linked polyvinyl alcohol with glyoxylic acid in the presence of an acid and a water-soluble salt.

Various types of polyvinyl alcohols can be used in the process of this invention. Usually, those having a polymerization degree from several tens to several thousands, preferably from 200 to 2000, are used. As the degree of polymerization increases the viscosity increases and therefore it becomes difficult to increase the concentration of polyvinyl alcohol in water. A higher saponification degree is preferred and polyvinyl alcohols having a saponification degree of at least 50 mol %, particularly at least 85 mol %, are preferably employed.

With respect to the cross-linking reagents used herein, it is necessary that these can react with polyvinyl alcohol to form cross-linking groups each having two or more carbon atoms between the molecules of the polyvinyl alcohol. Such cross-linking reagents include, for example, dialdehydes such as glyoxal, glutardialdehyde and terephthalaldehyde; diepoxide compounds such as 1,2—3,4-diepoxy butane; glycidyl ethers such as bis-epoxy-propylether, ethyleneglycol bis-epoxy-propylether and 1,4-butanediol bis-epoxy-propylether and epihalohydrins such as epichlorohydrin and epibromohydrin. Preferred cross-linking reagents are glutardialdehyde and epichlorohydrin.

The amount of the cross-linking reagent used depends on its type and on the reaction conditions. The reagent is added to the reaction system in such an amount that 4—50%, preferably 8—40% of the hydroxyl groups in the polyvinyl alcohol can react with the cross-linking reagent provided that the reaction proceeds stoichiometrically. If the amount of the cross-linking reagent to react is insufficient, the swelling volume of the resulting ion exchange resin increases too much. On the other hand, if the amount of the cross-linking reagent to react is in excess, it necessarily leads to resins with only a small exchange capacity.

The cross-linking reaction is preferably performed in a suspension reaction: an aqueous solution of a cross-linking reagent and a polyvinyl alcohol is dispersed in a hydrophobic dispersant medium. The concentration of the polyvinyl alcohol in the aqueous solution is 2—30%, preferably 5—15%. The dispersant media usually employed include aromatic hydrocarbons and their halogenated derivatives such as toluene, benzene, chlorobenzene and dichlorobenzene, and aliphatic hydrocarbons, alicyclic hydrocarbons and their halogenated derivatives such as n-heptane, n-hexane, liquid paraffins, cyclohexane, dichloromethane and dichloroethane. They may be used alone or in admixture. The dispersant is used in an amount two or more times, preferably 3—6 times by volume of the aqueous polyvinyl alcohol solution. It is preferred to add, to the dispersant, hydrophobic dispersing stabilizers, for example, hydrophobic cellulose such as ethylcellulose, cellulose acetatebutyrate, ethylhydroxycellulose; gum arabic, sorbitan sesquiolate, sorbitan monooleate, sorbitan monostearate and glycerol monostearate, in an amount ranging from 0.05 to 10%, preferably from 0.1 to 5% based on the dispersant.

Where spherical polyvinyl alcohol particles are used as the starting material, those solvents capable of swelling polyvinyl alcohol such as acetone and dimethyl sulfoxide can be used as the reaction solvent, as well as the foregoing compounds used as the dispersant. Although it depends on the type of cross-linking reagent used, the cross-linking reaction is usually performed at 0°C—100°C, preferably at 20°C—80°C, for 1—20 hours, most preferably for 2—8 hours. In the cross-linking reaction, an acid such as hydrochloric acid or sulfuric acid, or a base such as sodium hydroxide or potassium hydroxide is used as required. The thus obtained cross-linked polyvinyl alcohol is then separated by filtration from the reaction medium. Next it is washed with a hydrophilic organic solvent such as acetone and then with water, and used for the subsequent reaction.

In one embodiment of this invention porous or latently porous cross-linked polyvinyl alcohol is produced, which is characterized by a specific surface area of at least 5 $m^2/g$ and/or a pore volume of at least 0.1 ml/g.

The term "latently porous" used for the cross-linked polyvinyl alcohol means herein that the cross-linked polyvinyl alcohol internally contains fine inorganic salts and can be converted into the above porous cross-linked polyvinyl alcohol by extracting to remove the inorganic salts.

The porous or latently porous polyvinyl alcohols provide porous weakly acidic cation exchange resins through the reaction with glyoxylic acid.

Ion-exchange resins are generally classified into two types. One is a gel-type resin containing no macro-pores and another is a porous resin containing macro-pores. The gel-type resin and the porous resin, if having the same type of exchange groups, are significantly different from each other in their properties. In the case of weakly acidic ion exchange resins, a porous-type resin generally has the following merits as compared with a gel-type resin:

a) Small volume ratio between Na form (salt form) and H form (free acid form)

Generally, the volume of a weakly acidic cation exchange resin increases when the resin changes from the $H^{\oplus}$ form to the $Na^{\oplus}$ form and, particularly those gel-type resins with low cross-linking degree and those with high exchange capacity show a remarkable volume change, which may sometimes cause great problems in their application. Moreover, the large volume change noticeably reduces the

strength of the resins when they are used repeatedly. Such volume change of a resin can, however, be decreased by rendering the resins porous, whereby the foregoing difficulty can be avoided.

b) High reaction rate

Although the reaction rate of a weakly acidic cation exchange resin is lower than that of a strongly acidic cation exchange resin, this defect can be improved considerably by providing the former resin with a porous structure.

c) Applicable to the purification of natural products such as antibiotics

In the separation and purification of natural products, the resin is essentially required to be porous.

The weakly acidic cation exchange resin according to this invention also shows the same merits as mentioned above when rendered porous, whereby a broader field of application can be expected.

The porous cross-linked polyvinyl alcohol having a specific surface area of at least 5 $m^2/g$ can be produced by dispersing an aqueous solution containing a water-soluble salt, a linear polyvinyl alcohol and a cross-linking reagent in a dispersant medium and conducting the cross-linking reaction in the suspended state.

The water-soluble salts usable herein usually include chlorides such as sodium chloride, potassium chloride and calcium chloride, nitrates such as sodium nitrate, potassium nitrate and calcium nitrate, sulfates such as magnesium sulfate and phosphates such as sodium phosphate.

These water-soluble salts seem to act by precipitating the polyvinyl alcohol from the reaction medium by way of a salting-out effect when the polyvinyl alcohol increases its molecular weight by reaction with the cross-linking reagent (formation of the precipitates in the reaction medium is assumed from the fact that the reaction medium becomes a little turbid after the initiation of the reaction). Accordingly, these water-soluble salts should be used in a concentration sufficient to promote the above-mentioned salting-out effect. The concentration of the water-soluble salts depends on their type and is preferably between 5—12% for sodium chloride but 20% or more for calcium chloride. Generally, the water-soluble salt is used at a concentration ranging from 1 to 40%. The specific surface area of the cross-linked polyvinyl alcohol thus formed can be varied by controlling the concentration of the water-soluble salt.

Latently porous cross-linked polyvinyl alcohol, being capable of having a pore volume of at least 0.1 ml/g, can be produced by dispersing, in a dispersant medium, the aqueous solution of a linear polyvinyl alcohol and a cross-linking reagent dispersed with fine particles of a water-in-soluble inorganic salt, and conducting the cross-linking reaction in the suspended state.

The water-insoluble inorganic salts usually used herein include sulfates such as calcium sulfate, barium sulfate and lead sulfate and phosphates such as calcium phosphate. As mentioned above, the water-insoluble salt is dispersed in the aqueous solution of the polyvinyl alcohol and the cross-linking reagent. The amount of the water-insoluble salt used is usually 5—70 g, preferably 20—60 g per 100 g of the aqueous polyvinyl alcohol solution. Unlike the foregoing water-soluble salts, these water-insoluble salts are included in the resulting cross-linked polyvinyl alcohol upon cross-linking reaction. Then when these water-insoluble salts are extracted from the thus formed cross-linked products using an aqueous acidic solution, pores are left in the croslinked products at the sites of these salts. Accordingly, it is preferred to use as fine as possible water-insoluble salts. The particle size of he salt is usually 10 $\mu$m or less, particularly 5 $\mu$m or less. The pore volume in the cross-linked products can be changed by controlling the concentration of the water-insoluble salt in the aqueous polyvinyl alcohol solution. The thus obtained cross-linked polyvinyl alcohol can be used for the reaction with glyoxylic ac after being extracted with the water-insoluble salt and formed into porous cross-linked polyvinyl alcohol having a pore volume of at least 0.1 ml/g. Alterneively, it can also be subjected to the reaction with glyoxylic acid as it is in a state still containing the water-insoluble salt and can then be converted into the porous ion exchange resin havin a pore volume of at least 0.1 ml/g by extracting the water-insoluble salt.

Any porous cross-linked polyvinyl alcohol obtained by processes other thanthe above can also be used as long as they provide acetalization products having a specific surface area of 0.5 $m^2/g$ or more, preferably $m^2/g$ or more and/or a pore volume of 0.1 ml/g or more after the reaction with glyoxylic acid.

The reaction between cross-linked polyvinyl alcohol and glyoxylic acid is performed in an aqueous solution at a temperature between 50—100°C, preferably 70—95°C, for 1—30 hours, preferably for 3—8 hours, using a mineral acid such as sulfuric acid or hydrochloric acid as catalyst. The glyoxylic acid is used in an amount of 0.4 mol or more, preferably 0.9—1.8 mol per one mol of the hydroxyl group in the cross-linked polyvinyl alcohol. The concentration of the glyoxylic acid in the reaction system, although depending somewhat on the method of reaction, is usually 1—100 g, preferably 5—30 g per 100 g of water. The concentration of the mineral acid is usually 0.1—150 g, preferably 25—80 g per 100 g of water. Further, in carrying out the acetalization, water-soluble inorganic salts such as sodium sulfate, sodium hydrogen sulfate,

potassium sulfete, potassium hydrogen sulfate, ammonium sulfate, sodium chloride, potassium chloride and calcium chloride are dissolved in the aqueous solution. The presence of these salts contributes to the decrease in the volume ratio of the sodium form to the free acid form of the thus obtained weakly acidic resin (hereinafter referred to as Na/H volume ratio). The concentration of the inorganic salt in the aqueous solution is usually 5—200 g, preferably 25—100 g per 100 g of water. Particularly in a case where a gel-type cross-linked polyvinyl alcohol which is neither porous nor latently porous is used (as the cross-linked polyvinyl alcohol), the Na/H volume ratio of the resulting ion exchange resin is remarkably increased if the inorganic salt is absent. A large additional space is required when such a high Na/H volume ratio resin is packed in a column.

Swelling pressure is genereted when the resin changes its form from the free acidic form to sodium salt form in the column. This is a great disadvantage for the use.

However, a weakly acidic resin with Na/H volume ratio of 3 or less, preferably 2 or less can be obtained easily even from a gel-type cross-linked polyvinyl alcohol by using the salt. In this cese the salt is generally used at a concentration of 25—100 g per 100 g of water. The amount to be used naturally depends on the concentration of acid in the reaction medium and on the amount of exchange groups to be introduced. Generally, the Na/H volume ratio of the obtained resin will increase when the amount of exchange groups introduced is large if the salt concentration is not increased. Therefore, the greater the amount of exchange groups introduced, the higher the salt concentration preferred. Use of sodium sulfate or sodium chloride is generally advantageous.

The reaction products of the cross-linked polyvinyl alcohol and the glyoxylic acid are separated from the reaction medium in a conventional manner and washed with water to form a weakly acidic cation exchange resin in the free acid form. If the resin contains insoluble salts therein, these salts are extracted and removed with hydrochloric acid or the like.

It is assumed that the cation exchange resins according to this invention have exchange groups of a structure substantially represented as:

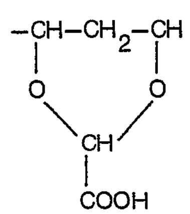

and have moderate acidity. While variations are possible depending on the production method, the exchange capacity of the resin is usually at least 3 meq/g and resins having an exchange capacity of 4 meq/g or greater can also be produced with ease. However, this can be varied depending on the production method. The swelling volume is usually 10 ml/g or less and a resin with a swelling volume of 5 ml/g or less can be produced with ease. Further, the cation exchange resins according to the invention can be porous resins characterized by a specific surface area of 0.5 $m^2/g$ or more and/or a pore volume of 0.1 ml/g or more. The porous resin preferably has both a specific surface area of 0.5 $m^2/g$ or more and a pore volume of 0.1 ml/g or more. Generally, those resins having a specific surface area of at least 5 $m^2/g$ are particularly preferred. The porous resins according to the invention provide various advantages as described above. For example, the Na/H volume ratio of the resin can be usually be descreased to 2.0 or less by making the resins porous.

This invention is illustrated by the following examples. In the specification all percentages mean percentage by weight unless otherwise specified. The physical properties are determined as follows:

Measurement of specific surface area and pore volume:

Resin treated with an aqueous hydrochloric acid solution is sufficiently washed with water and the water is replaced by acetone, which is further replaced by toluene. The resin is dried in a drier under a reduced pressure of 10 mmHg (1333.22 Pa) at 30°C for 24 hours and measurements are conducted as below:

Specific surface area:

Measured by B.E.T. method utilizing the adsorption of nitrogen gas using Quantasor (Uasa Battery Co.).

Pore volume:

Measured by mercury enforced type porosimeter (Carlo-Erba Com).

Exchange capacity, moisture content and swelling volume:

$H^{\oplus}$ form resin regenerated with an aqueous solution of hydrochloric acid and then sufficiently washed with deionized water is placed in a 10 ml measuring cylinder and 10 ml of the resin is accuratety sampled by slightly tapping the bottom of the cylinder. The resin is dewatered in a centrifuge at 350 x g for five minutes and then accurately weighed ($a_1$g). Next the resin is placed in 200 ml of an aqueous 0.2 N sodium hydroxide solution and shaken at room temperature for 24 hours. 20 ml of the aqueous sodium hydroxide solution is titrated with 0.1 N hydrochloric acid. Another 10 ml of the resin is accurately sampled, dewatered and weighed ($a_2$g), respectively in the same manner as above. The resin is then dried in a vacuum drier at 60°C, under 10 mmHg for 24 hours, and the weight (Cg) is accurately measured.

$$\text{Water content} = \frac{a_2 - C}{a_2} \times 100\ (\%),$$

Degree of swelling = 10/C (ml/g),

$$\text{Exchange capacity} = \frac{(h_o - h) \times 0.1 \times f \times 200/20}{a_1 \times C/a_2}$$

$$= (h_o - h) \times f \times \frac{a_2}{a_1} \times C\ (\text{meq/g})$$

where $h_o$ and h respectively represent the amounts (ml) of hydrochloric acid required for the titration before and after the resin is placed and f represents the factor of hydrochloric acid.

Na/H volume ratio:

Resin is regenerated with an aqueous solution of hydrochloric acid, washed with water. Afte this conditioning, it is converted into the $Na^{\oplus}$ form with an aqueous solution of sodium hydroxide and then sufficiently washed with deionized water. The resin is placed in a 10 ml measuring cylinder and 10 ml of the resin is accurately sampled by slightly tapping the bottom of the cylinder. The resin is converted into the $H^{\oplus}$ form with an aqueous solution of hydrochloric acid and then sufficiently washed with deionized water. The volume of the resin (d ml) is measured again using a 10 ml cylinder by slightly tapping its bottom.

Na/H volume ratio = 10/d

Example 1

(A) Production of cross-linked polyvinyl alcohol

Into a three-necked distillation flask equipped with a stirrer and a reflux condenser was charged 750 ml of toluene, into which 2.5 g of ethylcellulose (manufactured by Hercules Incorporated, trademark Ethylcellulose N-100) was dissolved at room temperature.

200 g of an aqueous 10% polyvinyl alcohol solution (polyvinyl alcohol having a degree of polymerization of 500 and a degree of saponification of 98.5—100 mol%, manufactured by the Nippon Synthetic Chemical Industry Co., trademark GOHSENOL NL—05) was separately charged into a beaker and cooled with ice-water. Then, 4 g of an aqueous 25% glutardialdehyde solution and 12 ml of 1 N hydrochloric acid were added under stirring and stirred for a further two minutes. The aqueous polyvinyl alcohol solution prepared in this way was dispersed in the above-mentioned toluene solution at room temperature, whereby the number of revolutions of the stirrer was adjusted so that polyvinyl alcohol beads of 1 mm particle diameter were formed.

The agitation was further continued for 30 minutes at room temperature, and the reaction was conducted for a further two hours while heating the dispersion at 60°C.

After cooling to room temperature, the reaction product was filtered, washed with 100 ml acetone five times and then washed sufficiently with water.

(B) Reaction of cross-linked polyvinyl alcohol and glyoxylic acid

Spherical particles of the cross-linked polyvinyl alcohol prepared in step (A) were dewatered in a centrifuge at 350 G for 5 minutes and the following reaction was conducted.

Into a three-necked round-bottomed flask equipped with a stirrer nd a reflux condenser was charged 320 ml of water, and 134 g of anhydrous sodium sulfate and 101 ml of concentrated sulfuric acid were added. The temperature of the solution was elevated by the dilution heat of sulfuric acid. After the solution had cooled to room temperature, the total amount of the cross-linked polyvinyl alcohol dewatered in the centrifuge was added and dispersed in the solution. 33.6 g of glyoxylic acid was further added. After continuous stirring for 30 minutes at room temperature, the reaction was conducted for a further 8 hours while heating the dispersion at 90°C.

After cooling to room temperature, half of the reaction solution was withdrawn and the same amount of water was added to the remaining reaction solution. By repeating this procedure twice, the concentration of the salt and acid in the reaction solution was reduced. Then the reaction product was filtered and washed with water.

The resin thus obtained was added to a three-necked round-bottomed flask containing 500 ml of 2 N sodium hydroxide and purified by heating at 60°C for 5 hours.

The purified resin was cooled to room temperature, charged in a column and regenerated by passing through it 500 ml of 2 N hydrochloric acid at a space velocity of 2 and then washed well with water.

The thus obtained resin had a moisture content of 44.8%, an exchange capacity of 3,58 meq/g and a swelling volume of 3.9 ml/g.

Examples 2 to 5

(A) Production of cross-linked polyvinyl alcohol

Spherical particles of cross-linked polyvinyl alcohol were prepared in exactly the same manner as in Example 1(A) except for the use of 8 g of an aqueous 25% glutardialdehyde solution.

(B) Reaction of cross-linked polyvinyl alcohol and glyoxylic acid

The cross-linked polyvinyl alcohol and glyoxylic acid were reacted in exactly the same manner as in Example 1(B) under the conditions shown in Table 1.

The properties of the resins thus obtained were measured and the results are shown in Table 2.

TABLE 1

| | Example 2 | Example 3 | Example 4 | Example 5 |
|---|---|---|---|---|
| Cross-linked polyvinyl alcohol (g) | 5 | 5 | 1.8 | 5 |
| Glyoxylic acid (g) | 10 | 10 | 10 | 30 |
| Conc. sulfuric acid (ml) | 47 | 40 | 40 | 47 |
| Sodium sulfate (g) | 30 | 60 | 40 | 18.5 |
| Water (ml) | 100 | 100 | 100 | 100 |

TABLE 2

| | Example 2 | Example 3 | Example 4 | Example 5 |
|---|---|---|---|---|
| Moisture content (%) | 45.9 | 39.0 | 43.0 | 46.4 |
| Exchange capacity (meq/g) | 4.53 | 3.53 | 4.22 | 5.04 |
| Swelling volume (ml/g) | 3.2 | 2.1 | 2.5 | 2.5 |
| Na/H volume ratio | 3.0 | 1.8 | 2.0 | 4.9 |

Example 6

The cross-linked polyvinyl alcohol prepared in exactly the same manner as in Examples 2—5 (A) was reacted with glyoxylic acid in exactly the same manner as in Example 3 except that sodium sulfate was not used.

The obtained resin had a moisture content of 43.4%, an exchange capacity of 4.32 meq/g, a swelling volume of 2.6 ml/g and an Na/H volume ratio of 7.1. Accordingly, the Na/H volume ratio of this resin was significantly greater than that of the ion exchange resins in Example 2 and Example 4 having a similar ion exchange capacity.

Example 7

(A) Production of cross-linked polyvinyl alcohol

Spherical particles of cross-linked polyvinyl alcohol were prepared in exactly the same manner as in Example 3(A) except for the use of dichloroethane instead of toluene as the dispersant and for the use of cellulose acetatebutyrate (manufactured by Eastman Kodak Co., trademark CAB 381—20) instead of ethylcellulose as dispersion stabilizer.

(B) Reaction of cross-linked polyvinyl alcohol and glyoxylic acid

The cross-linked polyvinyl alcohol and glyoxylic acid were reacted in exactly the same manner as in Example 3(B) except for the use of 31.3 g of sodium hydrogen sulfate instead of sodium sulfate.

The obtained resin had a moisture content of 46.4%, an exchange capacity of 5.02 meq/g, a degree of swelling of 2.2 ml/g and a Na/H volume ratio of 4.4.

Example 8

(A) production of cross-linked polyvinyl alcohol

Into a three-necked round-bottomed flask equipped with a stirrer and a reflux condenser was charged 80 ml of water, to which 2.8 g of sodium hydroxide was dissolved. 15 g of polyvinyl alcohol (manufactured by The Nippon Synthetic Chemical Industry Co., trade mark GOHSENOL NL—05) was dispersed into the aqueous sodium hydroxide solution and dissolved under heating at 80°C for one hour.

To another three-necked round-bottomed flask equipped with a stirrer and a reflux condenser was added a solution of 350 ml kerosene and 5 ml of sorbitan sesquioleate (Kao-Atlas Co., trade mark Arlacel 83) and heated to 80°C. The abovementioned aqueous polyvinyl alcohol solution was dispersed into this kerosinesolution at 80°C under stirring. After continuous heating at 80°C for 30 minutes, the dispersion was cooled to room temperature while continuing the stirring. When it had cooled to room temperature, 5.1 ml of

epichlorohydrin was added to carry out the reaction at room temperature for 24 hours. The resulting beads were filtered and then washed with acetone and with water.

(B) Reaction of cross-linked polyvinyl alcohol and glyoxylic acid

The cross-linked polyvinyl alcohol prepared in step (A) was dewatered in a centrifuge at 350 x g for 5 minutes and then the following reaction was conducted.

Into a three-necked round-bottomed flask equipped with a stirrer and a reflux condenser was charged 240 ml of water, to which were added 102 g of anhydrous sodium sulfate and 78 ml of concentrated sulfuric acid. After cooling to room temperature, the total amount of the dewatered cross-linked polyvinyl alcohol was dispersed into the solution. Then 38 g of glyoxylic acid was added to the solution. After stirring for 1 hour at room temperature, it was heated at 90°C for 8 hours.

The reaction products were filtered and purified in the same manner as in Example 1.

The thus obtained resin had a moisture content of 45.2%, an exchange capacity of 3.57 meq/g and a swelling volume of 3.8 ml/g.

Example 9

(A) Production of cross-linked polyvinyl alcohol

Cross-linked polyvinyl alcohol beads were prepared in the same manner as in Example 8(A) except that the reaction with epichlorohydrin was conducted at 60°C for 5 hours.

(B) Reaction of cross-linked polyvinyl alcohol and glyoxylic acid

The cross-linked polyvinyl alcohol and glyoxylic acid were subjected to a reaction in the same manner as in Example 8(B).

The obtained resin had a moisture content of 43.0 %, an exchange capacity of 3.56 meq/g and a swelling volume 3.2 ml/g.

Example 10

(A) Production of cross-linked polyvinyl alcohol

Into a three-necked round-bottomed flask equipped with a stirrer was charged 200 g of an aqueous 10% polyvinyl alcohol solution (manufactured by Nippon Synthetic Chemical Industry Co., trademark GOHSENOL NL—05) to which 8 ml of an aqueous 25% glutardialdehyde solution was added at room temperature under stirring. 100 g of finely powdered calcium sulfate dihydrate was further added to form a slurry. After the slurry was sufficiently homogenized, 12 ml of 1 N sulfuric acid was rapidly added to the slurry and it was dispersed in a dispersant medium prepared separately as below:

The dispersant medium was prepared by dissolving 1 g of cellulose acetatebutyrate (manufactured by Eastman Kodak Co., trademark CAB 381—20) in 400 ml of dichloroethane charged into a three-necked round-bottomed flask equipped with a stirrer and a reflux condenser. After dispersing the above-mentioned slurry in the dispersant medium under stirring at room temperature, a cross-linking reaction was conducted by heating at 60°C for 2.5 hours.

The reaction product was cooled to room temperature and then filtered and washed with 100 ml of acetone three times. Then the product was well washed with water to obtain spherical particles of cross-linked polyvinyl alcohol containing calcium sulfate.

(B) Reaction of cross-linked polyvinyl alcohol and glyoxylic acid

After dewatering the spherical particles of the cross-linked polyvinyl alcohol prepared in step (A) in a centrifuge at 350 x g for 5 minutes, the following reaction was conducted.

Into a three-necked round-bottomed flask equipped with a stirrer and a reflux condenser was charged 100 ml of water, to which 40 g of anhydrous sodium sulfate and 40 ml of concentrated sulfuric acid were added. The temperature of the solution was elevated by the dilution heat of the sulfuric acid. After the solution had cooled to room temperature, 25 g of cross-linked polyvinyl alcohol dewatered in the centrifuge was added and dispersed into the solution. 10 g of glyoxylic acid was further added to the solution. After continuous stirring at room temperature for 30 minutes, the solution was heated further for 8 hours under heating at 90°C.

After cooling to room temperature, half of the reaction solution was withdrawn and the same amount of water was added to the remaining reaction solution. By repeating this procedure twice, the concentrations of the salt and the acid in the reaction solution were reduced. The reaction product was filtered and washed with water.

(C) Removal of calcium sulfate

The resin prepared in step (B) and 500 ml of 2 N hydrochloric acid were charged into a three-necked round-bottomed flask equipped with a stirrer and agitated at room temperature for two hours. The hydrochloric acid was removed by filtration and another 500 ml of 2 N hydrochloric acid was added. After repeating the above procedure twice, filtration and water washing of the reaction product were conducted. The resin from which the calcium sulfate had been removed was charged into a three-necked round-bottomed flask containing 500 ml of 2 N sodium hydroxide and purified under heating at 60°C for 5 hours.

The purified resin was cooled to room temperature, packed in a column, washed with water, regenerated by passing 300 ml of 2 N hydrochloric acid at space velocity of 2 and then well washed with water.

The obtained resin had a moisture content of 77.2%, an exchange capacity of 4.61 meq/g, a

swelling volume of 7.0 ml/g, a specific surface area of 1.5 $m^2$/g, a pore volume of 1.74 ml/g and a Na/H volume ratio of 1.52.

Example 11

(A) Production of cross-linked polyvinyl alcohol

The procedures were conducted in exactly the same manner as in Example 10.

(B) Removal of calcium sulfate

25 g of spherical particles of cross-linked polyvinyl alcohol containing calcium sulfate were charged into a three-necked round-bottomed flask with a stirrer. Calcium sulfate was removed in the same manner as in Example 10 and cross-linked polyvinyl alcohol containing no calcium sulfate was obtained.

The obtained cross-linked polyvinyl alcohol had a moisture content of 74.3%, a specific surface area of 0.37 $m^2$/g and a pore volume of 0.14 ml/g.

(C) Reaction of cross-linked polyvinyl alcohol and glyoxylic acid

The cross-linked polyvinyl alcohol containing no calcium sulfate prepared in step (B) was subjected to the reaction with glyoxylic acid in the same manner as in Example 10.

The obtained resin had a moisture content of 60.2%, an exchange capacity of 4.37 meq/g, a swelling volume of 3.7 ml/g, a specific surface area of 0.1 $m^2$/g and a pore volume of 0.19 ml/g.

Example 12

The procedures in this example were the same as in Example 10 except for the use of 60 g of calcium sulfate dihydrate in the preparation of cross-linked polyvinyl alcohol containing calcium sulfate.

The obtained resin had a moisture content of 70.0%, an exchange capacity of 4.67 meq/g, a swelling volume of 4.9 ml/g, a specific surface area of 1.3 $m^2$/g and an Na/H volume ratio of less than 2.

Example 13

The procedures in this example were conducted in the same manner as in Example 10 except for the use of 12 ml of an aqueous 25% glutardialdehyde solution in the preparation of cross-linked polyvinyl alcohol containing calcium sulfate.

The obtained resin had a moisture content of 77.7%, an exchange capacity of 4.55 meq/g, a swelling volume of 6.9 ml/g, a specific surface area of 1.8 $m^2$/g and an Na/H volume ratio of less than 2.

Example 14

(A) Production of cross-linked polyvinyl alcohol

Into a three-necked round-bottomed flask equipped with a stirrer and a reflux condenser was charged 300 g of an aqueous 10% sodium chloride solution, in which 30 g of polyvinyl alcohol powder (manufactured by The Nippon Synthetic Chemical Industry Co., trademark GOHSENOL NL—05) was dispersed under stirring. Then it was heated at 90°C for 8 hours to dissolve the polyvinyl alcohol. After cooling the solution to room temperature, 12 ml of an aqueous 25% glutardialdehyde solution was added to it. Further, 18 ml of 1 N hydrochloric acid was rapidly added. After a minute it was dispersed in a dispersant medium which was separately prepared as below: The dispersant medium was prepared by dissolving 7.5 g of ethylcellulose (manufactured by Hercules Incorporated, trademark Ethylcellulose N—100) into 500 ml of toluene charged into a three-necked round-bottomed flask equipped with a stirrer and a condenser. The above-mentioned aqueous poly-vinyl alcohol solution was dispersed in the dispersant medium under stirring at room temperature and, thereafter, the cross-linking reaction was conducted by heating at 60°C for 2.5 hours.

After cooling to room temperature, the reaction product was washed with 100 ml of acetone three times and then washed sufficiently with water. The specific surface area of the thus obtained resin was 113 $m^2$/g.

(B) Reaction of cross-linked polyvinyl alcohol and glyoxylic acid

The spherical particles of cross-linked polyvinyl alcohol prepared in step (A) were dewatered in a centrifuge at 350 G for 5 minutes and the following reaction was conducted.

700 ml of water was charged into a three-necked round-bottomed flask equipped with a stirrer and a reflux condenser, to which were added 280 g of anhydrous sodium sulfate and 280 ml of concentrated sulfuric acid. The temperature of the solution was elevated by the dilution heat of the sulfuric acid. After the solution had cooled to room temperature, the cross-linked polyvinyl alcohol dewatered in the centrifuge was dispersed in the solution. 69 g of glyoxylic acid was further added to the solution. After continuous stirring at room temperature for 30 minutes, the reaction was conducted for 8 hours at 90°C.

After filtration and water washing, the reaction product was charged into a three-necked round-bottomed flask containing one liter of 2 N sodium hydroxide and purified by heating at 60°C for 5 hours. After cooling, it was filtered and washed with water.

The purified resin was packed in a column, regenerated by passing one liter of 2 N hydrochloric acid at space velocity of 2 and then sufficiently washed with water.

The obtained resin had a moisture content of 66.6%, an exchange capacity of 3.87 meq/g, a

swelling volume of 4.7 ml/g, a specific surface area of 67 $m^2/g$, a pore volume of 0.95 ml/g and an Na/H volume ratio of less than 2.

Example 15

(A) Production of cross-linked polyvinyl alcohol

A dispersant medium was prepared by charging 500 ml of dichloroethane into a three-necked round-bottomed flask equipped with a stirrer and a reflux condenser and dissolving therein 1.5 g of cellulose acetatebutyrate (manufactured by Eastman Kodak Co., trademark CAB 381—20).

200 g of an aqueous 10% polyvinyl alcohol solution (manufactured by The Nippon Synthetic Chemical Industry Co., trademark GOHSENOL NL—05) was charged into another three-necked round-bottomed flask equipped with a stirrer, and 100 g of an aqueous 20% sodium chloride solution was added to the solution under stirring. 8 ml of 25% glutardialdehyde was added to the solution and 18 ml of 1 N sulfuric acid was further added and stirred rapidly. Then the resultant solution was dispersed in the dispersant medium referred to above at room temperature. The cross-linking reaction was conducted at 60°C for 2.5 hours.

After cooling to room temperature, the reaction product was filtered, washed with 100 ml of acetone and then sufficiently washed with water. The obtained resin had a specific surface area of 66.8 $m^2/g$.

(B) Reaction of cross-linked polyvinyl alcohol and glyoxylic acid

The procedures were conducted in the same manner as in Example 10. The obtained resin was purified by heating at 60°C for 5 hours in 500 ml of 2 N sodium hydroxide. After washing with water, the resin was regenerated by passing 300 ml of 2 N hydrochloric acid at space velocity of 2 and then sufficiently washed with water.

The obtained resin had a moisture content of 43.6%, an exchange capacity of 3.95 meq/g, a swelling volume of 2.4 ml/g, a specific surface area of 8.2 $m^2/g$, a pore volume of 0.1 ml/g and an Na/H volume ratio of 2.03.

Example 16

(A) Production of cross-linked polyvinyl alcohol

Into a three-necked round-bottomed flask equipped with a stirrer and a reflux condenser was charged 95 ml of water, to which 4.3 g of sodium hydroxide was dissolved. 15 g of polyvinyl alcohol powder (manufactured by The Nippon Synthetic Chemical Industry Co., trademark GOHSENOL NL—05) was dispersed into the aqueous sodium hydroxide solution and dissolved by heating at 80°C. When the solution was homogeneous it was cooled to 50°C and 30 g of finely powdered calcium sulfate dihydrate was added to form a slurry. Then 15.3 ml of epichlorohydrin was added to the slurry and the cross-linking reaction was conducted at 40°C for 7.5 hours. The obtained resin was filtered and then washed with acetone and water and used for the reaction described below.

(B) Reaction of cross-linked polyvinyl alcohol and glyoxylic acid

The procedures were conducted in the same manner as in Example 10.

(C) Removal of calcium sulfate

The procedures were conducted in the same manner as in Example 10. The obtained resin had a water content of 60.6%, an exchange capacity of 3.83 meq/g and a specific surface area of 12.8 $m^2/g$.

Measurement of the acidity of ion exchange resin

Example 17

(Measurement for the acidity of ion exchange resin):

0.2 g of a fine powder of DIAION WK 20 (registered trade mark of Mitsubishi Chemical Industries Limited, polyacrylic acid type ion-exchange resin) was dispersed in 100 ml of an aqueous 0.03 N sodium chloride solution and a neutralizing titration on the slurry was conducted using an aqueous 0.2 N sodium hydroxide solution containing 0.03 N sodium chloride. The pH value as determined at a load rate of 0.5 was 6.9.

On the other hand, the pH value determined at a load rate of 0.5 in the same manner as mentioned above was 5.0 for the finely powdered ion exchange resin obtained in Example 4.

Accordingly, it was confirmed that the weakly acidic cation exchange resin according to this invention had a higher acidity than that of the conventional polyacrylic acid type resin.

**Claims**

1. A weakly acidic cation exchange resin consisting of polyvinyl alcohol acetalized with glyoxylic acid in the presence of an acid and a water-soluble salt, characterized in that

a) the polyvinylalcohol is crosslinked by crosslinking groups each containing two or more carbon atoms in such an amount that 4—50% of the hydroxyl groups of the polyvinyl alcohol can react, and

b) The resin has the following properties: exchange capacity of at least 3 meq/g, swelling volume of at most 10 ml/g, specific surface area of at least 0.5 $m^2/g$ and/or pore volume of at least 0.1 ml/g.

2. The porous weakly acidic cation exchange resin as defined in claim 1, wherein said swelling volume is at most 5 ml/g.

3. The porous weakly acidic cation exchange resin as defined in claim 1, wherein said specific surface area is at least 5 $m^2/g$.

4. The porous weakly acidic cation exchange

resin as defined in claim 1, wherein the volume ratio of the $Na^+$ form to the $H^+$ form of the resin is at most 2.

5. The porous weakly acidic cation exchange resin as defined in claim 1, wherein said polyvinyl alcohol is cross-linked by glutardialdehyde.

6. The porous weakly acidic cation exchange resin as defined in claim 1, wherein said polyvinyl alcohol is cross-linked by epichlorohydrin.

7. A process for producing weakly acidic cation exchange resins which comprises reacting a polyvinyl alcohol with a cross-linking reagent capable of forming cross-linking groups each containing two or more carbon atoms in such an amount that 4—50% of the hydroxyl groups of polyvinyl alcohol can react, and reacting said cross-linked polyvinyl alcohol with glyoxylic acid in the presence of an acid and a water-soluble salt.

8. The process as defined in claim 7, wherein said cross-linking reagent is glutardialdehyde.

9. The process as defined in claim 7, wherein said cross-linking reagent is epichlorohydrin.

10. The process according to claims 7 to 9, which comprises reacting an aqueous solution containing the cross-linking reagent with the polyvinyl alcohol and a water-soluble salt in a dispersing medium, and reacting the porous cross-linked polyvinyl alcohol obtained with glyoxylic acid in the presence of an acid and a water-soluble salt.

11. The process according to claims 7 to 9 which comprises forming an aqueous solution of the cross-linking reagent and the polyvinyl alcohol and containing dispersed fine particles of a water-insoluble inorganic salt, suspending said aqueous solution in a dispersing medium, thereafter causing said cross-linking reagent to react with said polyvinyl alcohol to form a cross-linked polyvinyl alcohol containing said fine particles of water-insoluble inorganic salt therein, removing said water-insoluble inorganic salt and reacting said cross-linked polyvinyl alcohol with glyoxylic acid in the presence of an acid and a water-soluble salt.

12. The process according to claims 7 to 9 which comprises forming an aqueous solution of the cross-linking reagent and the polyvinyl alcohol and containing dispersed fine particles of a water-insoluble inorganic salt, suspending said aqueous solution in a dispersing medium, thereafter causing said cross-linking reagent to react with said polyvinyl alcohol to form a cross-linked polyvinyl alcohol containing said fine particles of water-insoluble inorganic salt therein, reacting said cross-linked polyvinyl alcohol thus formed with glyoxylic acid in the presence of an acid and a water-soluble salt and removing said water-insoluble inorganic salt.

**Revendications**

1. Résine échangeuse de cations faiblement acide consistant en alcool polyvinylique acétalisé avec de l'acide glyoxylique en présence d'un acide et d'un sel soluble dans l'eau, caractérisée en ce que:

a) l'alcool polyvinylique est réticulé par des groupes de réticulation contenant chacun deux ou plusieurs atomes de carbone et selon une quantité telle que de 4 à 50% des groupes hydroxyliques de l'alcool polyvinylique puissent réagir, et

b) la résine présente les propiétés suivantes: capacité d'échange d'au moins 3 meq/g, volume de gonflement d'au maximum 10 ml/g, aire de surface spécifique d'au moins 0,5 $m^2/g$ et/ou volume des pores d'au moins 0,1 ml/g.

2. Résine échangeuse d'ions faiblement acide et poreuse selon la revendication 1, caractérisée en ce que ledit volume de gonflement est au maximum de 5 ml/g.

3. Résine échangeuse d'ions faiblement acide et poreuse selon la revendication 1, caractérisée en ce que ladite aire de surface spécifique est d'au moins 5 $m^2/g$.

4. Résine échangeuse d'ions faiblement acide et poreuse selon la revendication 1, caractérisée en ce que le rapport volumique entre la forme $Na^+$ et la forme $H^+$ de la résine est au maximum de 2.

5. Résine échangeuse d'ions faiblement acide et poreuse selon la revendication 1, caractérisée en ce que ledit alcool polyvinylique est réticulé par du glutardihaldéhyde.

6. Résine échangeuse d'ions faiblement acide et poreuse selon la revendication 1, caractérisée en ce que ledit alcool polyvinylique est réticulé par de l'épichlorohydrine.

7. Procédé pour produire des résine échangeuse de cations faiblement acides, caractérisé en ce qu'il comprend la réaction d'alcool polyvinylique avec un réactif de réticulation capable de former des groupes de réticulation contenant chacun deux ou plusieurs atomes de carbone et selon une quantité telle que de 4 à 50% des groupes hydroxyles de l'alcool polyvinylique peuvent réagir, et la réaction dudit alcool polyvinylique réticulé avec de l'acide glyoxylique en présence d'un acide et d'un sel soluble dans l'eau.

8. Procédé selon la revendication 7, caractérisée en ce que ledit réactif de réticulation est du glutardihaldéhyde.

9. Procédé selon la revendication 7, caractérisée en ce que ledit réactif de réticulation est de l'épichlorohydrine.

10. Procédé selon l'une quelconque des revendications 7 à 9, caractérisée en ce qu'il comprend la réaction d'une solution aqueuse du réactif de réticulation avec de l'alcool polyvinylique et un sel soluble dans l'eau dans un milieu dispersant et la réaction de l'alcool polyvinylique réticulé et poreux obtenu avec l'acide glyoxylique en présence d'un acide et d'un sel soluble dans l'eau.

11. Procédé selon l'une quelconque des revendications 7 à 9, caractérisée en ce qu'il comprend la formation d'une solution aqueuse

du réactif de réticulation et de l'alcool polyvinylique et contenant de fines particules dispersées d'un sel inorganique insoluble dans l'eau, la suspension de ladite solution aqueuse dans un milieu dispersant, puis en ce qu'on amène ledit réactif de réticulation à réagir avec l'alcool polyvinylique pour former un alcool polyvinylique réticulé contenant lesdites fines particules de sel inorganique insoluble dans l'eau, à éliminer ledit sel inorganique insoluble dans l'eau et à faire réagir l'alcool polyvinylique réticulé avec l'acide glyoxylique en présence d'un acide et d'un sel soluble dans l'eau.

12. Procédé selon l'une quelconque des revendications 7 à 9, caractérisée en ce qu'il comprend la formation d'une solution aqueuse du réactif de réticulation et de l'alcool polyvinylique et contenant de fines particules dispersées d'un sel inorganique insoluble dans l'eau, la suspension de ladite solution aqueuse dans un milieu dispersant, puis à amener ensuite ledit réactif de réticulation à réagir avec l'alcool polyvinylique pour former un alcool polyvinylique réticulé contenant lesdites fines particules de sel inorganique insoluble dans l'eau, à faire réagir ledit alcool polyvinylique réticulé ainsi formé avec l'acide glyoxylique en présence d'un acide et d'un sel soluble dans l'eau, et à éliminer ledit sel inorganique insoluble dans l'eau.

**Patentansprüche**

1. Ein schwach saures Kationenaustaucherharz, bestehend aus mit Glyoxalsäure in Gegenwart einer Säure und eines wasserlöslichen Salzes acetalisiertem Polyvinylalkohol, gekennzeichnet dadurch, daß

a) der Polyvinylalkohol durch vernetzende Gruppen, von denen jede mindestens zwei Kohlenstoffatome enthält, in solch einer Menge vernetzt ist, daß 4 bis 50% der Hydroxylgruppen des Polyvinylalkohols reagieren können, und

b) das Harz die folgenden Eingenschaften hat: Austauschkapazität von mindestens 3 mäq/g, Quellvolumen von höchstens 10 ml/g, spezifische Oberfläche von mindestens 0,5 $m^2/g$ und/oder Porenvolumen von mindestens 0,1 ml/g.

2. Das poröse schwach saure Kationenaustauscherharz gemäß Anspruch 1, in dem das Quellvolumen höchstens 5 ml/g beträgt.

3. Das poröse schwach saure Kationenaustaucherharz gemäß Anspruch 1, in dem die spezifische Oberfläche mindestens 5 $m^2/g$ beträgt.

4. Das poröse schwach saure Kationenaustauscherharz gemäß Anspruch 1, in dem das Volumenverhältnis der $Na^+$-Form zu der $H^+$-Form der Harzes höchstens 2 beträgt.

5. Das poröse schwach saure Kationenaustaucherharz gemäß Anspruch 1, in dem der Polyvinylalkohol durch Glutardialdehyd vernetzt ist.

6. Das poröse schwach saure Kationenaustauscherharz gemäß Anspruch 1, in dem der Polyvinylalkohol durch Epichlorhydrin vernetzt ist.

7. Ein Verfahren zur Herstellung von schwach sauren Kationenaustaucherharzen, das Umsetzung eines Polyvinylalkohols mit einem zur Bildung vernetzender Gruppen, von denen jede mindestens 2 Kohlenstoffatome enthält, befähigten Vernetzungsmittel in einer solchen Menge, daß 4 bis 50% der Hydroxylgruppen des Polyvinylalkohols reagieren können, und Umsetzen des vernetzten Polyvinylalkohols mit Glyoxalsäure in Gegenwart einer Säure und eines wasserlöslichen Salzes umfaßt.

8. Das Verfahren gemäß Anspruch 7, in dem das Vernetzungsmittel Glutardialdehyd ist.

9. Das Verfahren gemäß Anspruch 7, in dem das Vernetzungsmittel Epichlorhydrin ist.

10. Das Verfahren gemäß den Ansprüchen 7 bis 9, das Umsetzen einer das Vernetzungsmittel enthaltenden wäßrigen Lösung mit dem Polyvinylalkohol und einem wasserlöslichen Salz in einem Dispergiermedium und Umsetzen des erhaltenen porösen vernetzten Polyvinylalkohols mit Glyoxalsäure in der Gegenwart einer Säure und eines wasserlöslichen Salzes umfaßt.

11. Das Verfahren gemäß den Ansprüchen 7 bis 9, das Bereiten einer dispergierte feine Teilchen eines wasserunlöslichen anorganischen Salzes enthaltenden wäßrigen Lösung des Vernetzungsmittels und des Polyvinylalkohols, Suspendieren dieser wäßrigen Lösung in einem Dispergiermittel, danach Umsetzen des Vernetzungsmittels mit dem Polyvinylalkohol zu vernetztem Polyvinylalkohol, der die feinen Teilchen des wasserunlöslichen anorganischen Salzes darin enthält, Entfernen des wasserunlöslichen anorganischen Salzes und Umsetzen des vernetzten Polyvinylalkohols mit Glyoxalsäure in Gegenwart einer Säure und eines wasserlöslichen Salzes umfaßt.

12. Das Verfahren gemäß den Ansprüchen 7 bis 9, das Bereiten einer dispergierte feine Teilchen eines wasserunlöslichen anorganischen Salzes enthaltenden wäßrigen Lösung des Vernetzungsmittels und des Polyvinylalkohols, Suspendieren dieser wäßrigen Lösung in einem Dispergiermittel, danach Umsetzen des Vernetzungsmittels mit dem Polyvinylalkohol zu vernetztem Polyvinylalkohol, der die feinen Teilchen des wasserunlöslichen anorganischen Salzes darin enthält, Umsetzen des so entstandenen vernetzten Polyvinylalkohols mit Glyoxalsäure in der Gegenwart einer Säure und eines wasserlöslichen Salzes und Entfernen des wasserunlöslichen anorganischen Salzes umfaßt.